# EUROPEAN PATENT APPLICATION

(11) **EP 2 995 939 A1**
(43) Date of publication of application: **16.03.2016**
(21) Application number: 14003189.9
(22) Date of filing: 15.09.2014
(51) Int. Cl.: G01N 27/12

(54) **Temperature / Power controller for mems sensor**

(71) Applicant: Sensirion AG, 8712 Stäfa (CH)
(72) Inventor: Wang, Zhenhua, CH-8712 Stäfa (CH); Banjevic, Mirjana, CH-8712 Stäfa (CH); Mrcarica, Zeljko, CH-8712 Stäfa (CH); Steiner Vanha, Ralph, CH-8712 Stäfa (CH)
(74) Representative: Toleti, Martin

(57) **Abstract**

A temperature and/or power controller implemented in CMOS compatible manner is described to control the temperature and/or power supply to a micromachined sensor part, wherein the controller is an analog proportional and integral (PI) controller embedded into a digital CMOS control system of the sensor.

## Description

### FIELD OF THE INVENTION

The present invention relates to a controller to control a temperature and/or power supply to a device, particularly to a sensor with micromachined elements such as a hotplate of a monolithic gas sensor, a bimorphic cantilever and the like.

### BACKGROUND OF THE INVENTION

In general, a microsensor system comprises sensitive materials (e.g., metal oxide and polymer), transducers (e.g., cantilever and silicon oxide/nitride membrane), actuators (e.g., thermal bimorph and resistive heater), readout electronics (e.g., amplifiers, filters, and analog-to-digital converters), controller architectures (e.g., temperature controllers, deflection controllers, and position controllers), and an interface unit to handle the communication with the external world. The general microsystem requirements include low cost and high reliability.

A CMOS monolithic microsystem meets these requirements since CMOS technology is cheap and reliable. Furthermore, monolithic solutions avoid the use of external components thereby reducing size and cost. Monolithically integrated interface circuits additionally reduce packaging efforts, the number of input/output pins, and provide more reliable electrical signals than a multichip solution with transducers and electronics on different chips.

An overview of the challenges and available methods to implement controllers, particularly as applied to the field of monolithic microsystem, is given for example in: "CMOS-based monolithic controllers for smart sensors comprising micromembranes and microcantilevers", D. Barrettino, et.al., IEEE Trans. Circuits and Syst. -I, vol. 54, no. 1, pp. 141-152, Jan 2007. In addition to presenting a general overview, specific implementations for two linear time-invariant controllers are described. The first example presented relates to an analog proportional (P) controller for a chemical gas sensor with a microhotplate and the second example relates to a digital proportional, integral, and derivative (PID) controller for a microcantilever-type sensor.

Another example of a known analog proportional controller for a chemical sensor with microhotplate is described in: "A smart single-chip micro-hotplate-based gas sensor system in CMOS technology", D. Barrettino, et.al., Analog Integrated Circuits and Signal Processing, 39, pp. 275-287, 2004.

Another example of a digital PID controller for a chemical sensor with microhotplate is described in: "A digital CMOS architecture for a micro-hotplate array", U. Frey, et. Al., IEEE J. Solid-State Circuits, vol. 42, no. 2, pp. 441-450, 2007.

Any design of a new controller for applications such as described above is a compromise between general costs including area, tuning, manufacturing and the desired properties of the controller including accuracy, stability and flexibility. In view of the prior art it is therefore seen as an object of the invention to provide a controller which combines stability with a small layout area and relatively simple tuning procedures.

### SUMMARY OF THE INVENTION

Hence, according to a first aspect of the invention, there is provided a temperature and/or power controller preferably implemented in CMOS compatible manner, to control the temperature and/or power supply to a micromachined sensor part, wherein the controller is an analog proportional, integral (PI) controller.

In a preferred embodiment of the invention the PI controller includes a switched resistor and/or a switched-capacitor resistance in the feedback loop.

In a preferred embodiment of the invention the PI controller includes an operational amplifier with a 2C-R (two capacitors, one resistor) feedback network consisting of a sole capacitor in the feedback path of the operational amplifier and the second capacitor in parallel with a sole resistor in an input path of the operational amplifier. Thus the network of the operational amplifier can be built using just three additional passive electronic elements.

In a preferred embodiment of the invention the PI controller includes a differential difference amplifier (DDA) to amplify an input signal difference or sum.

In a preferred embodiment of the invention an output of the PI controller is connected directly to a transistor regulating the power supplied to the micromachined sensor part.

In a preferred embodiment of the invention, the controller includes an amplifier to amplify a voltage drop across one or more temperature sensing elements representative of the temperature of the micromachined sensor part. In a preferred variant of this embodiment the one or more temperature sensing elements include at least two resistive elements each providing a voltage drop representative of the temperature to the amplifier. In a variant of this embodiment the amplifier is preferably a differential difference amplifier configured to provide an amplified output proportional to the sum of the voltage drops across the at least two resistive elements.

In a preferred embodiment of the invention, an analog AC ground level for all signals of the controller is set to 0V or less than ten percent of a chip voltage Vdd and not - as usual - as half the chip voltage Vdd.

Preferably, the supply voltage Vdd for the chip is 5V or less, and preferably is 1.8V or less, and hence contributes to the controller operating as low power controller. Preferably, the controller and the heater share the same supply voltage Vdd.

In a preferred embodiment of the invention, the control input or set point generator includes an N-bit current-steering (CS) DAC for setting the control parameter.

In a preferred embodiment of the invention, the control input generator includes a waveform shaper, for example a low pass filter.

In a preferred embodiment of the invention, the control input generator uses current-mode addition instead of conventional voltage-mode signal subtraction.

In a preferred embodiment of the invention, the temperature sensing elements are connected to a current source providing a constant current, preferable including an M-bit current steering DAC to adjust the constant current to compensate for MEMS and ASIC process spreads.

In a preferred embodiment of the invention, the controller further includes a power metering for sensing power changes in the micromachined sensor part to determine the efficiency of a heating process. The efficiency measurement can be used to for example detect the presence of gas in a gas sensing layer or even provide information relating to the identity of the gas species.

Other advantageous embodiments are listed in the dependent claims as well as in the description below.

### Brief Description of the Drawings

Embodiments of the present invention, aspects and advantages will become also apparent from the following detailed description thereof. Such description makes reference to the annexed drawings, wherein:
FIGs. 1A and 1B is a schematic diagram of a cross-section of a chemical gas sensor using micromachined (MEMS) parts and CMOS logic, according to an embodiment of the present invention;
FIG. 2 is a schematic circuit diagram of a control circuit in accordance with an example of the invention;
FIGs. 3A - 3D illustrate possible variants for a PI controller in accordance with examples of the invention;
FIGs. 4A - 4D illustrate aspects of a temperature sensor for the PI controller in accordance with examples of the invention;
FIGs. 5A and 5B illustrate the use of current- mode addition for the error calculation of the PI controller in accordance with an example of the invention;
FIG. 6 shows an example of the control or set point parameter input to a PI controller in accordance with the invention;
FIG. 7 shows the effect of a waveform shaper on a controller in accordance with the invention;
FIG. 8 shows an example of the trimming parameter input to a controller in accordance with the invention; and
FIGs. 9A and 9B illustrate an optional power meter circuit in accordance with an example of the invention.

### DETAILED DESCRIPTION

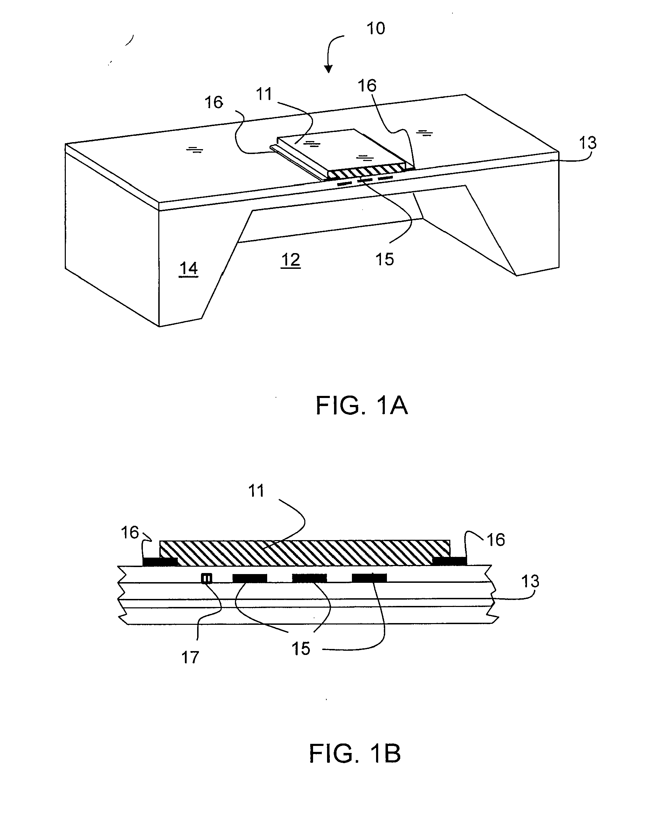

An example of a gas sensor 10 according to an embodiment of the present invention with a sensing layer 11 of metal oxide - also referred to as metal oxide layer 11 - is illustrated in a simplified manner in Figs. 1A and 1B in cross-sections. The gas sensor 10 is integrated with a CMOS circuitry (not shown) on a single substrate 14 or chip. A portion of layers 13 including metallization layers for the CMOS circuit elements and the substrate 14 are etched away to form a cavity 12 at the location of the sensing layer 11. The remaining layers 13 form a MEMS-type micromachined membrane - also referred to as hotplate - to support the sensing layer 11.

Embedded within the layers 13 are conducting elements forming a heater 15 to provide a local source of heat to heat the metal oxide layer 11 during operation of the gas sensor 10. The temperature can rise rapidly around the metal oxide layer 11, while the thicker part of the chip reacts due to its thermal inertia with a slower rise of temperature. By controlling the heater 15 accordingly, a chemical reaction in the vicinity of the hotplate can be activated, which can be detected by the metal oxide layer 11 on the hotplate.

The metal oxide layer 11 is contacted by two conductive electrodes 16 and hence acts as a resistor. In the presence of an analyte this resistance changes thereby providing a measure of the concentration of the analyte in the immediate vicinity of the metal oxide layer 11.

Typically an additional temperature sensor 17 is integrated into the membrane using for example the temperature dependence of a polycrystalline silicon (poly-Si) or metal resistor.

As described in the references cited above, controllers to control the temperature or temperature profile of the sensor (and hence the heater 15) are typically implemented as linear close-loop proportional (P-) analog controllers or proportional and integral and differential (PID-) digital controllers.

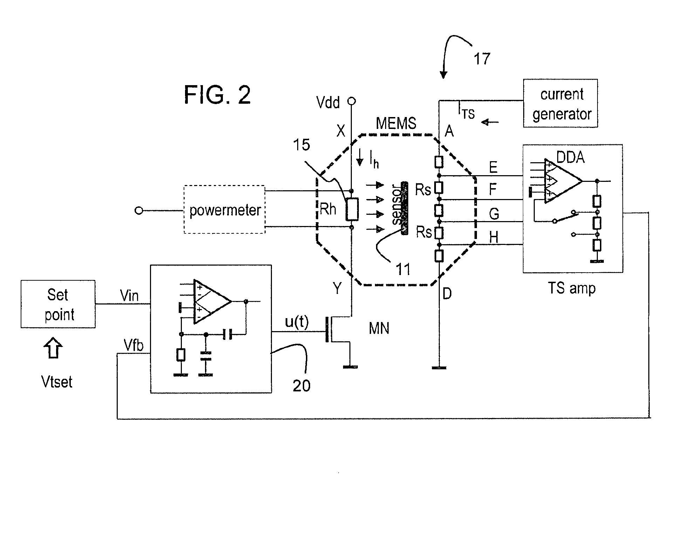

An example of a control circuit in accordance with the present invention is shown as block circuit diagram in FIG. 2. The borders of a MEMS part of the sensor - which includes the membrane of the sensor according to FIG. 1 - are indicated as dashed hexagon. This part includes a power supply to the heater 15 represented as resistance Rh. The power supply is provided by the common voltage supply of the chip Vdd, which is in typical CMOS circuits 5V or less, and preferably is 1.8 V in the present example. The heater current Iₕ is controlled by a power transistor (MN). The control system described controls the heater current Iₕ through the voltage applied to the gate of the power transistor MN.

The control signal u(t) is for the current example the gate voltage applied to the power transistor MN. The control signal u(t) is determined by a proportional integral (PI-) controller 20 of the control circuit. Specific examples of different possible implementations of the PI controller 20 are described below in further details.

The inputs of the PI-controller 20 are connected to a set point generator, which in the present example generates a set point signal Vin representative of the desired temperature of the membrane and hence the gas sensing layer 11, preferably dependent on a digital input signal Vtset, and a measured signal Vfb representative of a measured temperature, which in the example of controlling a temperature of the hotplate is a temperature as determined by the temperature sensor 17 and a readout/amplifying circuit connected to it. Specific examples of different possible implementations of the temperature sensor 17 and its circuit are also described below in further details.

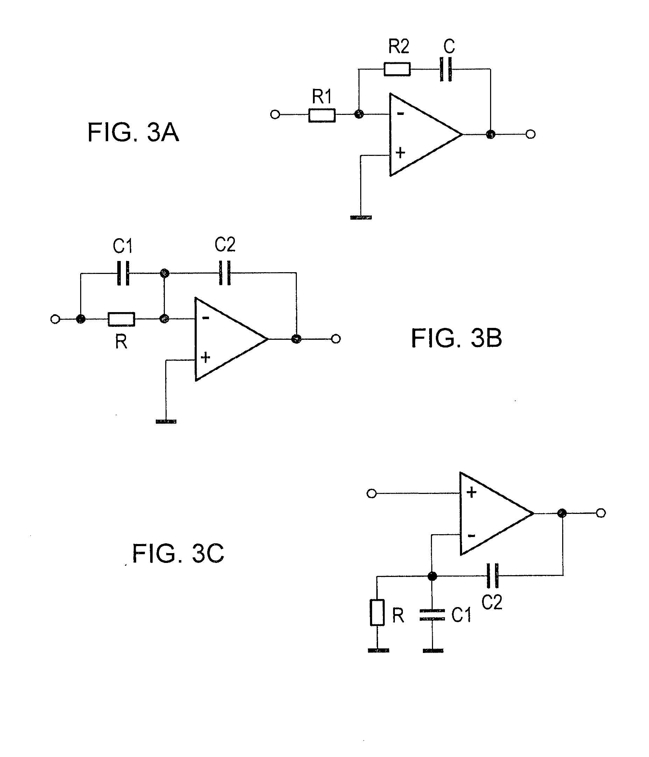

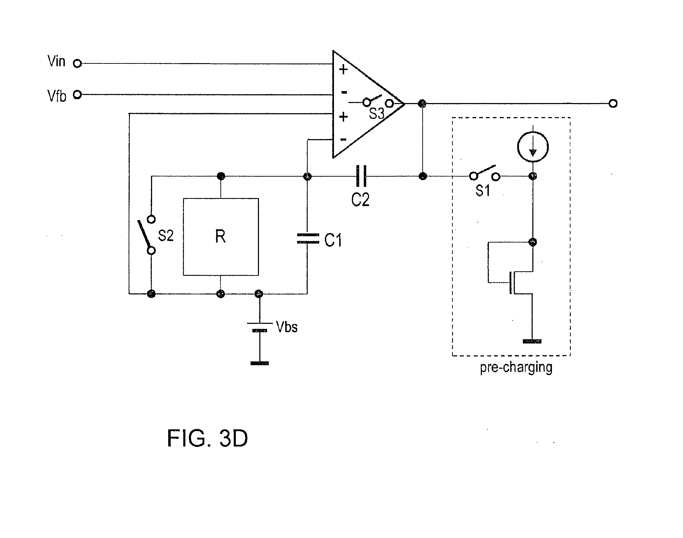

The PI controller 20 is implemented in CMOS compatible form using solely analog elements, in particular one or more analog amplifiers, such as differential or operational amplifiers, within a (negative) feedback network including one or more resistors and / or one or more capacitors. The time dependent control signal u(t) of the PI controller 20 is defined as u(t) = kp*e(t) + ki*int(e(t)) using a difference or error signal e(t) = Vin-Vfb between the set point signal and the measured signal and kp as the proportional gain and kᵢ as the integral gain with int(e(t)) being the time integral of e(t). Three examples of compact (in terms of silicon area used) PI controllers 20 using single operational amplifiers are shown in FIGs. 3A - 3C, a further example of a PI controller 20 using a differential difference amplifier (DDA) is shown in FIG. 3D.

The example of FIG. 3A is an inverting PI controller with a proportional gain of kₚ=-R2/R1 and an integral gain of kᵢ=-1/R1*C on an error signal applied to its input terminal.

The example of FIG. 3B is an inverting PI controller which can be readily modified for use in a switching circuit (SC) configuration. The PI controller has a proportional gain of kₚ=-C1/C2 and an integral gain of kᵢ=-1/R*C2 on an error signal applied to its input terminal.

The example of FIG. 3C is a non-inverting PI controller which is modified for use in a switching circuit configuration. The PI controller has a proportional gain of kₚ=1+C1/C2 and an integral gain of kᵢ=1/R*C2 on an error signal applied to its input terminal. This implementation is also referred to as 2C-R PI controller for the purpose of this description.

A more integrated variant of the 2C-R PI controller of FIG. 3C in a switching circuit implementation is shown in FIG. 3D. In this example a differential difference amplifier (DDA) is used. The first pair of differential inputs is connected to the set point signal Vin and the measured signal Vfb, respectively. The second pair of differential inputs is connected to the feedback network. As in FIG. 3C, this implementation of the PI controller has a proportional gain of kₚ=1+C1/C2 and an integral gain of kᵢ=1/R*C2 for the difference signal of the first pair of inputs.

The response of the PI controller is improved by pre-charging the capacitor C2 during the states in which the output resistance of the DDA is off (symbolized by switch S3 being open). During the pre-charging the switches S1 and S2 are closed and the capacitor C2 is charged to a predefined voltage approximately equal to the threshold voltage of the power transistor MN determining the heater current. After pre-charging, the DDA turns into its normal amplifying state (represented by switch S3 being closed) and the switches S1 and S2 are opened. In this configuration the feedback network is again a 2C-R PI controller.

The R-C1 node can be connected directly to ground or as shown in FIG. 3D it can be set to a small bias voltage Vbs, preferably in the range of 50 mV to 100 mV. The latter configuration is regarded as advantageous, if the cooling of the MEMS part is done through an active temperature control, i.e. by setting a lower temperature, rather than just through turning the heating current off.

A value of the resistor R to ground of the non-inverting input can be increased by using a switched resistor with the equivalent resistance R(eq)= R *T/w where T is the switching period and w the pulse width or a switched-capacitor resistor with the equivalent resistance R(eq)= T/C where C is the capacitance of the switched capacitor and T is the switching period. Thus the resistor R can be increased to very high values with the switched resistor being the most area efficient implementation of a high ohmic resistance. It should be noted that the use of a switched resistor can also be advantageous in the examples of FIGs. 3B and 3C.

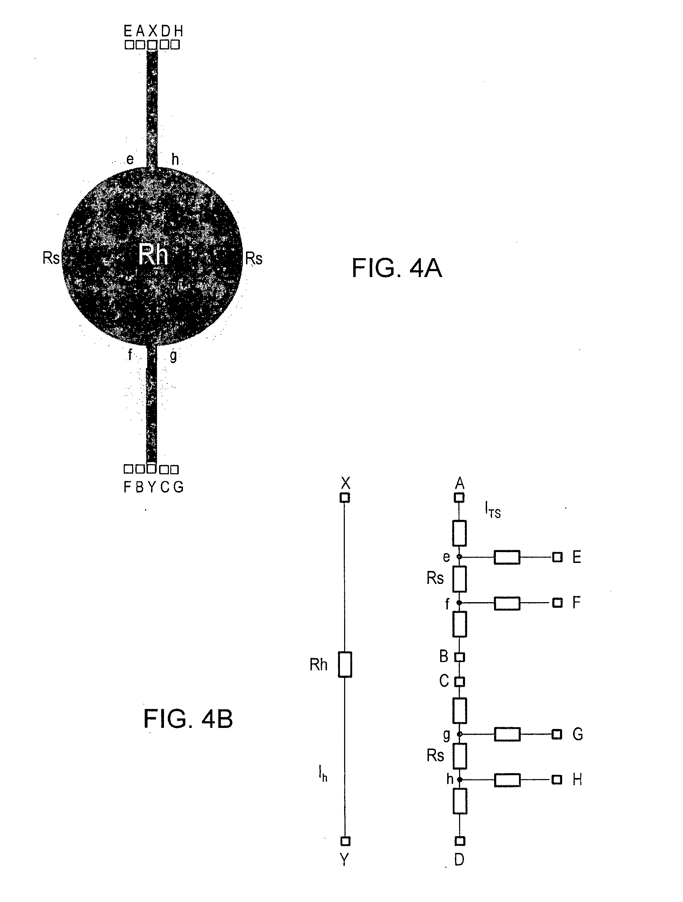

A possible implementation of a temperature sensor 17 and its associated readout and amplifying circuit is described in FIGs. 4A - 4D. The terminals A to D and X, Y of the physical layout of the temperature sensor 17 are shown in FIG. 4A. A central heating resistor Rh has the terminals X and Y. Two resistors Rs have the intermediate or direct terminals e,f,g,h. Each of the intermediate terminals e,f,g,h can be contacted through two terminal points, e.g., intermediate terminal e through terminals E and A, intermediate terminal f through terminals F and B, etc. By connecting terminals B and C a current I_{TS} can be injected into the series of resistors Rs from terminal A to terminal D. The voltage drops along the resistors Rs can be individually measured at the terminals E,F and G,H respectively.

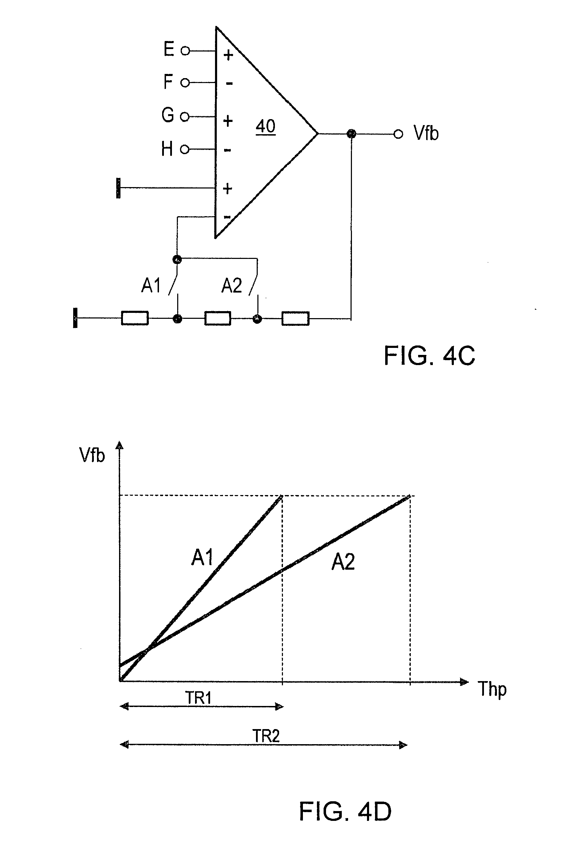

As shown in FIG. 4C, the terminals E,F and G,H are connected to a difference amplifier 40, which is configured to amplify the voltage drops between terminals E,F and between G,H. The amplified voltage drop Vfb is the measured signal led to the input of the PI controller as described above.

In the example of FIG. 4C the gain of the amplifier is variable. The gain can be set by closing either switch A1 or A2, thus increasing or decreasing the measuring range (TR1, TR2) and accuracy of the temperature measurement as illustrated in FIG. 4D.

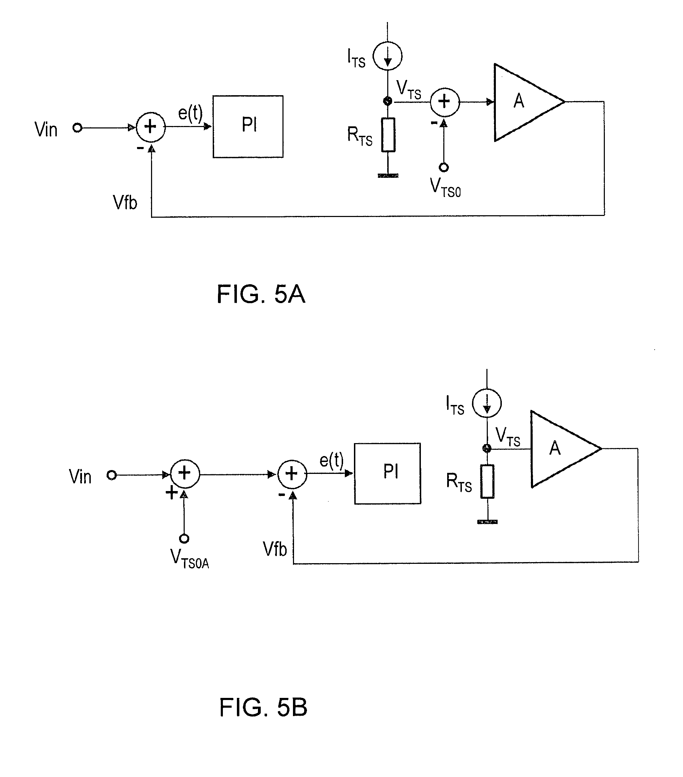

In FIGs. 5A and 5B there are illustrated two different implementations for converting the voltage drop V_{TS} across the temperature sensing resistor R_{TS} into a signal representative of an absolute temperature. In a first approximation the temperature dependence of the resistor R_{TS} can be represented by R_{TS}= R_{TS0}*[1+α(T-T0) with α being the linear temperature coefficient and T0 a base or reference temperature, typically 25°C. The resulting contribution V_{TS0} of the reference temperature to the voltage drop can be either subtracted from the voltage drop prior to the amplification as shown in FIG. 5A or after the amplification by subtracting an amplified voltage term V_{TS0A} = A*V_{TS0}. Alternatively, the same voltage can be added to the set point signal Vin which serves as input to the PI controller as shown in FIG. 5B. The latter implementation has advantages when the set point signal is provided as current signal as currents can be more readily added and/or subtracted than voltages.

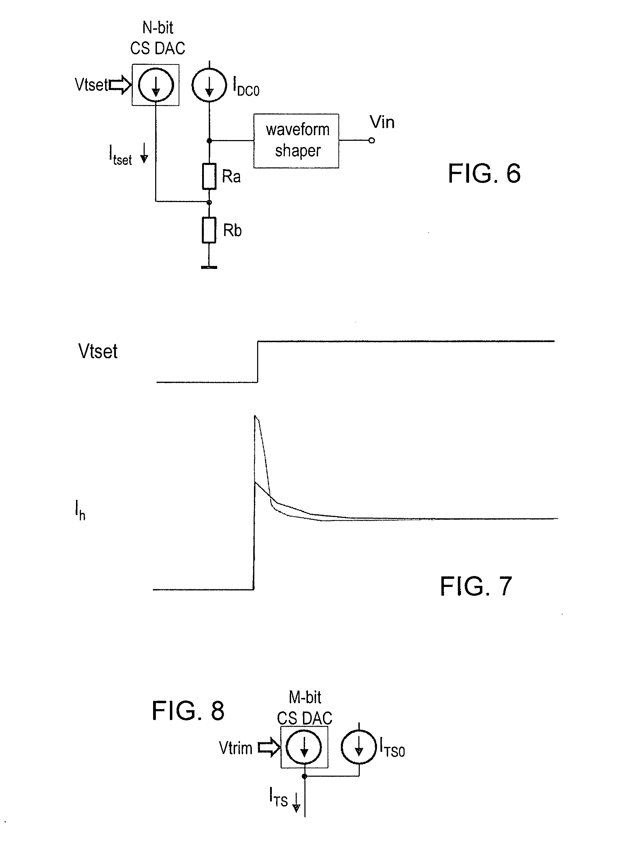

An example of a set point generator for providing the set point signal Vin as current to the analog PI controller in an otherwise digital CMOS control circuit is shown in FIG. 6. Here the digital input signal Vtset is the input to a (N-bit) current steering digital-analog converter CS DAC. The number of bits N is arbitrary and determined by specific implementation of the CMOS control and the word length used for control inputs. The resulting current Iₜₛₑₜ changes the voltage drop across the resistors Ra and Rb as desired.

The voltage drop represents the step changes in the current Iₜₛₑₜ. It has been found that it is advantageous to smoothen the step changes in the input signal Vin to the PI controller through a waveform shaper. The waveform shaper reduces a peak heating current as shown in FIG. 7. FIG. 7 illustrates the response of the heating current Iₕ to a (step) change in the set point value Vtset. As can be seen, the overshoot of the heater current Iₕ is significantly reduced. An analogue waveform shaper can be implemented best as a first-order low-pass filter with relatively-large time constant or by any equivalent filter design.

A current steering DAC can also be applied to provide trimming parameters to the analog PI controller in an otherwise digital control system. In the example of FIG. 8 a digital trimming parameter Vtrim is applied to the constant current I_{TS}, which provides the current for the temperature measurement as described above. The trimming current from the M-bit CS DAC is added to the current I_{TS0} as generator by a constant current source on the chip. As above, the number of bits M is arbitrary and determined by specific implementation of the CMOS control and the word length used for trimming parameter. It is worth noting that by replacing the current generator as shown in FIG. 2 by an adjustable current generator as per FIG. 8 a single trimming parameter is introduced into the controller (assuming that the gains kp and kᵢ are set through the design of the elements of the PI controller). It is found that this single trimming parameter, which adjusts the temperature measurement on the membrane and hence the feedback signal Vfb to the PI controller, can be sufficient to compensate the controller across the spread or tolerances typically encountered in a CMOS process as well as the spread or tolerance of the temperature sensor resistance Rs.

A power- and temperature-dependent measurement on a MEMS type sensor can be further improved by determining or evaluating the thermal efficiency of the heating process. The thermal efficiency η can be defined as a parameter linking the temperature or temperature changes T of the sensor to the power P used to generate those changes, i.e., in the simplest case T = η*P. To evaluate such a relation to monitor the efficiency and parameters related to it, it is required to monitor the power or a related parameter in the heating circuit. As shown in FIG. 2 the optional power meter is connected to the heating circuit which provides the current Iₕ to the heating elements.

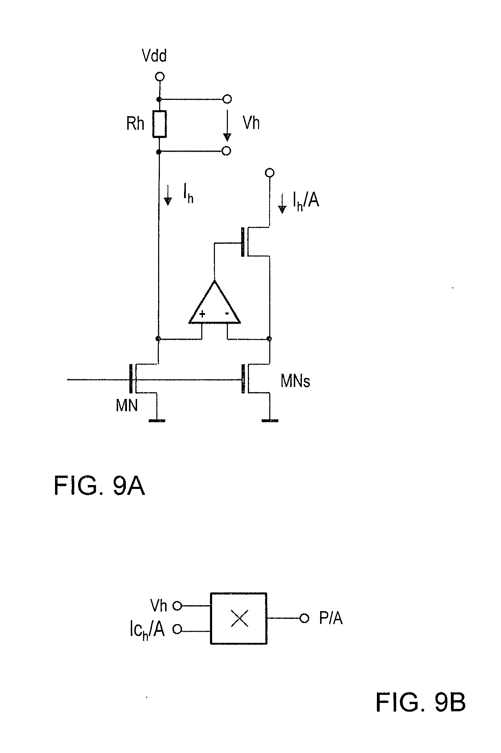

In principle it is possible to use the voltage drop Vh across the heating resistors Rh as a relative measure of the power P. In such a case the power meter of FIG. 2 would be reduced to a voltage measurement Vh as indicated in FIG. 9A. An accurate or absolute measurement of power however requires a measure of the heating current Iₕ simultaneously to the measurement of Vh. This can be done directly with a current meter in the heating circuit using for example the voltage drop across an additional constant resistor in the heating circuit. It is however more preferred to first generate a scaled current Iₕ/A of the heating current to limit or reduce the current consumption of the power measurement. In FIG. 9A the scaled current is generated through the use of a scaled version MNs of the driving power transistor MN with the gate voltages to both transistors being supplied by the output of the PI controller. An operation amplifier having inputs connected to both current paths and its output to the gate of a second transistor is used to mirror the (changing) voltage drop across the heater Rh. The scaled current can be either measured directly or converted into a voltage.

The result of both measurements, i.e., the voltage drop Vh and the current or scaled current can be further processed to yield the power P or the scaled power P/A as illustrated by use of a multiplier in FIG. 9B.

While above there are shown and described embodiments of the invention, it is to be understood that the invention is not limited thereto but may be otherwise variously embodied and practiced within the scope of the following claims.

## Claims

1. Temperature and/or power controller implemented in CMOS compatible manner to control a temperature and/or a power supply to a micromachined sensor part, wherein the controller is an analog proportional integral (PI) controller (20).

2. The controller of claim 1, comprising a switched resistor and/or a switched-capacitor resistance in a feedback loop.

3. The controller of claim 1 or 2, comprising an operational or error amplifier, a sole capacitor in a feedback loop of the amplifier and a second capacitor in parallel with a sole resistor in an input path of the amplifier.

4. The controller of any of the preceding claims, comprising a differential difference amplifier (DDA) to amplify an input signal difference or sum.

5. The controller of any of the preceding claims, wherein an output of the PI controller (20) is connected directly to a transistor (MN) regulating the power supplied to the micromachined sensor part.

6. The controller of any of the preceding claims, comprising an amplifier to amplify a voltage drop across one or more temperature sensing elements (Rs) representative of a temperature of the micromachined sensor part.

7. The controller of claim 6, comprising at least two resistive elements as temperature sensing elements (Rs), each providing a voltage drop representative of the temperature to the amplifier,
and in particular wherein an output of the amplifier is proportional to a sum of the voltage drops across all the resistive elements.

8. The controller of any of the preceding claims, comprising
a current steering digital analog converter (CS DAC) to receive a control parameter or set point signal from a digital CMOS circuit controlling the sensor, and
in particular a waveform shaper between an output of the CS DAC and an input of the PI controller (20) to smoothen the output of the CS DAC before applying the smoothed output as an input to the PI controller (20).

9. The controller of any of the preceding claims, using current mode addition to provide a control parameter or a set point signal as input of the PI controller (20).

10. The controller of any of the preceding claims, comprising a current steering digital analog converter (CS DAC) to receive a trimming parameter from a digital CMOS circuit controlling the sensor.

11. The controller of claim 10, wherein the trimming parameter adjusts a feedback signal of the PI controller, in particular a feedback signal related to the temperature of the micromachined sensor part.

12. The controller of claim 10 or 11, wherein the trimming parameter value is the sole trimming parameter to adjust the PI controller after manufacturing.

13. The controller of any of the preceding claims, wherein an analog AC ground level for all signals of the controller is set to a DC value less than ten percent of a chip voltage Vdd, or to OV.

14. Control circuit, comprising
a sensing layer (11) on a membrane as micromachined sensor part,
a heater (15) for heating the sensing layer (11),
a temperature sensor (17) for measuring a temperature of the sensing layer (17) or the membrane,
a controller in accordance with any of claims 1 to 13 for controlling the heater (15) dependent on a deviation of the temperature measured by the temperature sensor (17) from a set point temperature.

15. Resistive gas sensor comprising a control circuit according to claim 14, wherein the sensing layer (11) is sensitive to one or more analytes.
